# EUROPEAN PATENT APPLICATION

(11) **EP 4 645 719 A1**
(43) Date of publication of application: **05.11.2025**
(21) Application number: 23932804.0
(22) Date of filing: 24.11.2023
(51) Int. Cl.: H04B 17/309

(54) **MONITORING METHOD AND APPARATUS**

(30) Priority: 13.04.2023 CN 202310437618
(71) Applicant: ZTE Corporation, Shenzhen, Guangdong 518057 (CN)
(72) Inventor: LI, Yong, Shenzhen, Guangdong 518057 (CN); LI, Lun, Shenzhen, Guangdong 518057 (CN); LU, Zhaohua, Shenzhen, Guangdong 518057 (CN); ZHENG, Guozeng, Shenzhen, Guangdong 518057 (CN)
(74) Representative: Ziebig Hengelhaupt Intellectual Property Attorneys Patentanwaltskanzlei PartGmbB
(86) International application number: PCT/CN2023/134108
(87) International publication number: WO 2024/212533

(57) **Abstract**

Disclosed are a monitoring method and apparatus. The method comprises: a first communication node acquiring an association matrix of a pre-coding matrix processing mode; and monitoring the pre-coding matrix processing mode according to a pre-coding matrix before transmission, and the association matrix.

## Description

The present disclosure claims a priority to Chinese Patent Application No. 202310437618.3, and filed on April 13, 2023, the entire content of which is incorporated into the present application by reference.

### TECHNICAL FIELD

Embodiments of the present disclosure relate to the field of communication technologies, and in particular, to a monitoring method and apparatus.

### BACKGROUND

For the fifth generation (5th generation) communication system, a base station may send a reference signal to a terminal, and the terminal may measure the reference signal, to determine channel state information from the base station to the terminal. The terminal, after determining the channel state information, reports the channel state information to the base station. The base station may determine a channel quality between the base station and the terminal according to the channel state information, and transmit data according to the channel quality.

### SUMMARY

In a first aspect, the embodiments of the present disclosure provide a monitoring method, applied to a first communication node. The monitoring method includes: acquiring an association matrix of a precoding matrix processing mode; and monitoring the precoding matrix processing mode according to a pre-transmission precoding matrix and the association matrix.

In a second aspect, the embodiments of the present disclosure provide a monitoring method, applied to a second communication node. The monitoring method includes: receiving a monitoring value from a first communication node, where the monitoring value is determined according to a similarity metric value between a pre-transmission precoding matrix and an association matrix of a precoding matrix processing mode; and monitoring the precoding matrix processing mode according to the monitoring value.

In a third aspect, the embodiments of the present disclosure provide a first communication node. The first communication node includes: an acquiring unit and a monitoring unit. The acquiring unit is configured to acquire an association matrix of a precoding matrix processing mode. The monitoring unit is configured to monitor the precoding matrix processing mode according to a pre-transmission precoding matrix and the association matrix.

In a fourth aspect, the embodiments of the present disclosure provide a second communication node. The second communication node includes: a receiving unit and a monitoring unit. The receiving unit is configured to receive a monitoring value from a first communication node, where the monitoring value is determined according to a similarity metric value between a pre-transmission precoding matrix and an association matrix, and the association matrix corresponds to a precoding matrix processing mode. The monitoring unit is configured to monitor the precoding matrix processing mode according to the monitoring value.

In a fifth aspect, the embodiments of the present disclosure provide a monitoring apparatus. The apparatus may implement the functions executed in the above-mentioned various aspects, and the functions may be implemented by hardware. The apparatus may include: a processor and a communication interface, and the processor may be configured to support the apparatus to implement the monitoring method described in the first aspect or the second aspect above.

In another design, the apparatus may further include a memory, and the memory is configured to store computer-executed instructions and data necessary for the apparatus. When the apparatus is running, the processor executes the computer-executed instructions stored in the memory, so that the apparatus performs the monitoring method described in the first aspect or the second aspect above.

In a sixth aspect, the embodiments of the present disclosure provide a computer readable storage medium. The computer readable storage medium may be a readable non-volatile storage medium, the computer readable storage medium stores computer instructions or a program, and the computer instructions or the program, when executed on a computer, cause the computer to perform the monitoring method described in the first aspect or the second aspect above.

In a seventh aspect, the embodiments of the present disclosure provide a computer program product containing instructions. The instructions, when executed on a computer, cause the computer to perform the monitoring method described in the first aspect or the second aspect above.

### BRIEF DESCRIPTION OF THE DRAWINGS

FIG. 1 is a structural schematic diagram of a communication system according to some embodiments.
FIG. 2 is a structural schematic diagram of a communication apparatus according to some embodiments.
FIG. 3 is a schematic diagram of a monitoring method according to some embodiments.
FIG. 4 is a schematic diagram of another monitoring method according to some embodiments.
FIG. 5 is a structural schematic diagram of another communication apparatus according to some embodiments.
FIG. 6 is a structural schematic diagram of yet another communication apparatus according to some embodiments.

### DETAILED DESCRIPTION

In order to enable those skilled in the art to better understand the technical solutions of the embodiments of the present disclosure, the technical solutions in the embodiments of the present disclosure will be described clearly and completely below with reference to the drawings in the embodiments of the present disclosure.

In the description of the present disclosure, unless otherwise stated, the character "/" means "or", and for example, "A/B" may mean A or B. Herein, "and/or" merely describes an association relationship of associated objects, and means that there may be three kinds of relationships, and for example, A and/or B may mean: only A, only B, and both A and B. In addition, "at least one" means one or more, and "plurality of / multiple" means two or more. Expressions, such as "first" and "second", etc., do not limit the number and execution order, and the expressions, such as "first" and "second", etc., also do not necessarily limit different items. "at least a/one (item) of" or similar expressions thereof refer to any combination of these items, including a single one (item) or any combination of plural ones (items). For example, at least one (item) of a, b, or c may mean: a, b, c, a and b, a and c, b and c, or all of a and b and c, where a, b or c may be singular or plural.

It should be noted that in the present disclosure, the expressions such as "exemplary/exemplarily" or "for example/such as (e.g.)" are used to present an example, illustration, or explanation. Any embodiment or design solution described with "exemplary/exemplarily" or "for example/such as (e.g.)" in the present disclosure should not be construed as preferred or advantageous over other embodiments or design solutions. Rather, the usage of the expressions, such as "exemplary/exemplarily" or "for example/such as (e.g.)", is intended to present relevant concepts in a detailed manner.

In the embodiments of the present disclosure, "indication" or its variants may include a direct indication and an indirect indication. For example, by taking indication information as an example in the following, the indication information may directly carry information A itself or its index, to achieve a purpose of directly indicating the information A. Alternatively, the indication information may also carry information B having an associated relationship with the information A, thereby achieving the purpose of indirectly indicating the information A while indicating the information B.

In the wireless communication technology, the long-term evolution (Long Term Evolution, LTE) technology in the fourth generation wireless communication technology and the new radio (New Radio, NR) technology in the fifth generation wireless communication technology are technologies based on orthogonal frequency division multiplexing (Orthogonal Frequency Division multiplexing, OFDM).

In an OFDM technology, a smallest frequency domain unit is a subcarrier, and a smallest time domain unit is an OFDM symbol. In an example, in order to facilitate the use of frequency domain resources, a resource block (Resource Block) and a bandwidth part (Bandwidth Part, BWP) are defined. A resource block is defined as a specific number of continuous subcarriers. A bandwidth block is defined as another specific number of continuous resource blocks on a carrier. In another example, in order to facilitate the use of a time domain resource, a slot is defined. A slot is defined as another specific number of continuous OFDM symbols.

In some embodiments, by taking an example in which a base station needs to transmit data to a terminal, the base station needs to determine a scheduling strategy for transmitting data from the base station to the terminal based on a channel quality of a downlink channel (or referred to as a downlink channel quality) between the base station and the terminal. Therefore, in order to determine the downlink channel quality between the base station and the terminal, the base station may send a reference signal (or referred to as a downlink reference signal) to the terminal, and the terminal receives and measures the reference signal, to determine channel state information for indicating the channel quality between the base station and the terminal. The terminal reports the channel state information to the base station. In this way, the base station may determine the channel quality between the base station and the terminal according to a channel state indicated by the channel state information that is received. Furthermore, the base station may determine a strategy for a data transmission according to the channel quality, and transmit data according to the strategy, thereby improving the efficiency of the data transmission.

The reference signal sent from the base station may be alternatively described as a downlink reference signal.

In an example, in the LTE system, the downlink reference signal may include a cell-specific reference signal (Cell-specific Reference Signal, CRS), a channel state information reference signal (Channel-state Information Reference Signal, CSI-RS).

In another example, in the NR system, the downlink reference signal may include a CSI-RS.

The CSI-RS may be carried by a channel state information reference signal resource (CSI-RS resource). The channel state information reference signal resource is composed of code division multiplexing (Code Division Multiplexing, CDM) groups. A CDM group is composed of radio resource elements. CSI-RSs of a group of CSI-RS ports is multiplexed thereon by code division multiplexing.

The accuracy of the channel state indicated by the channel state information affects the strategy for the data transmission of the base station, and then affects the efficiency of transmitting data from the base station to the terminal.

In an example, the channel state information may include a CQI (Channel Quality Indicator) or a precoding matrix indicator (Precoding Matrix Indicator, PMI). The CQI may be used to indicate a channel quality between the base station and the terminal. The PMI may be used to indicate a precoding matrix applied to an antenna of the base station.

In the channel state information, a reporting format of the CQI may include Format 1 and Format 2 in the following, and a reporting format of the PMI may include Format 3, Format 4, and Format 5 in the following.

Format 1, the reporting format of the CQI may be wideband CQI reporting. That is, the terminal reports a CQI for indicating a channel quality by a channel state information reporting frequency band (CSI reporting band). The channel quality indicated by the CQI corresponds to the entire channel state information reporting frequency band.

Format 2, the reporting format of the CQI may be subband CQI reporting. That is, the terminal, when reporting the CQI by the channel state information reporting frequency band, may report the CQI in units of sub-bands.

In Format 2, a channel quality corresponds to a sub-band. That is, the channel state information reporting frequency band includes sub-bands, and each sub-band corresponds to a channel quality. A sub-band is a frequency domain unit, and may be defined as N continuous resource blocks (Resource Block, RB), where N is a positive integer. For convenience of description, in the embodiments of the present disclosure, the sub-band may be referred to as a channel quality indication sub-band, or referred to as a CQI sub-band, or referred to as a subband. N is referred to as a size of the CQI sub-band, or referred to as a CQI sub-band size, or as a sub-band size. The BWP may be divided into sub-bands, and the channel state information reporting frequency band (CSI reporting band) may be defined by a subset of the sub-bands of the BWP. For example: the channel state information reporting frequency band may be sub-bands of which channel state information needs to be reported, among the sub-bands of the BWP.

Based on the above two reporting formats of the CQI, a method for the terminal to determine the channel quality may include: determining the channel quality according to a strength of a reference signal that is received by the terminal and/or determining the channel quality according to a signal to interference plus noise ratio of a reference signal that is received.

It should be noted that, if the channel quality on the channel state information reporting frequency band does not change much, the terminal may report the CQI by the wideband CQI reporting. This reporting may reduce the resource overhead for CQI reporting. If the channel quality varies widely in the frequency domain, the terminal may report the CQI by the sub-band CQI reporting. This reporting may increase the accuracy of the CQI reporting.

Format 3, a reporting format of the PMI may be broadband PMI reporting. That is, the terminal may report a PMI by the channel state information reporting frequency band. The PMI corresponds to the entire channel state information reporting frequency band.

Format 4, a reporting format of the PMI may be sub-band PMI reporting. That is, the terminal may report a PMI by each sub-band of the channel state information reporting frequency band, or report a component of a PMI by each sub-band of the channel state information reporting frequency band.

For example, the PMI is composed of two parts: X1 and X2, and the terminal may report an X1 and X2 of a PMI by each sub-band of the channel state information reporting frequency band. For example, the terminal may report an X1 by the entire channel state information reporting frequency band and report an X2 by each sub-band. For another example, the terminal may report an X1 and an X2 by each sub-band.

Format 5, a reporting format of the PMI is that: the reported PMI indicates R precoding matrices for each sub-band, where R is a positive integer. In terms of a frequency domain granularity for feeding back the precoding matrix, R may also represent a number of precoding matrices included in each sub-band, or a number of precoding matrices included in each CQI sub-band.

In some examples, by also taking an example in which a data transmission is performed between the base station and the terminal, in the multi-antenna technology, the base station may, by using a precoding matrix to weight an antenna, transmit a reference signal through a radio channel. The terminal may measure the reference signal sent from the base station, to obtain a matrix, and send information of the matrix to the base station. For example, the terminal may directly send the information of the matrix to the base station, or the terminal may process the matrix and send the information of the processed matrix to the base station.

In the embodiments of the present disclosure, the above-mentioned matrix or the processed matrix may be referred to as a pre-transmission precoding matrix. That is, the pre-transmission precoding matrix refers to a matrix that the terminal needs to transmit to the base station but has not yet been transmitted. Of course, the pre-transmission precoding matrix may also be referred to as a precoding matrix before transmission or a precoding matrix to be transmitted or a matrix to be transmitted or other names, which is not limited thereto.

Thus, the base station may reconstruct according to the information of the received pre-transmission precoding matrix, to obtain a reconstructed precoding matrix, and determine a data transmission strategy according to the reconstructed precoding matrix.

In some embodiments, there may be a difference between the above-mentioned reconstructed precoding matrix and the pre-transmission precoding matrix. This difference may affect the data transmission strategy determined by the base station according to the reconstructed precoding matrix. For example, it affects the matrix used when the base station weighs the antenna, which may affect the data transmission between the base station and the terminal.

For example, the information of the pre-transmission precoding matrix used for a transmission cannot completely describe the pre-transmission precoding matrix.

For another example, the information of the pre-transmission precoding matrix received by the base station is different from the transmitted information of the pre-transmission precoding matrix. For example, information carrying the information of the pre-transmission precoding matrix (for the convenience of description, it may be referred to as carrying information) loses a part of the information in a transmission process. For another example, the carrying information loses a part of the information due to compression. For another example, a part information of the carrying information is lost due to conversion in the transmission process.

For another example, the base station cannot completely restore the pre-transmission precoding matrix from the received information of the pre-transmission precoding matrix.

The above reasons each may lead to a difference between the reconstructed precoding matrix of the base station and the pre-transmission precoding matrix. Therefore, it is necessary to monitor the precoding matrix processing mode and adjust the precoding matrix processing mode timely according to a monitoring result. The precoding matrix processing mode may refer to operations related to the pre-transmission precoding matrix. For example, the precoding matrix processing mode may include at least one of operations 1-1 to 1-4.

1-1, determine a pre-transmission precoding matrix.

Determining the pre-transmission precoding matrix may refer to that the terminal determines the pre-transmission precoding matrix.

For example, the terminal may select the pre-transmission precoding matrix from a candidate matrix set.

For another example, the terminal may determine a radio channel coefficient matrix by measuring a reference signal sent from the base station, and use a matrix composed of right singular vectors of the radio channel coefficient matrix as the pre-transmission precoding matrix.

1-2, determine an indicator of the pre-transmission precoding matrix.

Determining the indicator of the pre-transmission precoding matrix may refer to that the terminal determines the indicator of the pre-transmission precoding matrix. The indicator of the pre-transmission precoding matrix may also be referred to as information of the pre-transmission precoding matrix or a PMI of the pre-transmission precoding matrix.

In an example, the indicator of the pre-transmission precoding matrix may directly indicate or indirectly indicate the pre-transmission precoding matrix.

For example, the terminal may determine the indicator of the pre-transmission precoding matrix according to the pre-transmission precoding matrix. For example, the terminal may use a rank of the pre-transmission precoding matrix as the indicator of the pre-transmission precoding matrix. For another example, the terminal may select an indicator corresponding to the pre-transmission precoding matrix from a plurality of candidate indicators. A candidate indicator may correspond to a matrix.

For another example, the terminal may determine the indicator of the precoding matrix according to a configuration parameter of the base station. Different configuration parameters may correspond to different indicators of the precoding matrix.

For another example, the terminal may obtain encoding information, that is, information used for indicating the indicator of the pre-transmission precoding matrix, by an encoding model. The encoding model may be a calculation model. For example, the encoding model may be a machine learning model, or a neural network model, etc., which is not limited thereto.

1-3, transmit the indicator of the pre-transmission precoding matrix.

Transmitting the indicator of the pre-transmission precoding matrix may refer to transmitting information of the pre-transmission precoding matrix.

For example, the terminal, after determining the indicator of the pre-transmission precoding matrix, may transmit the indicator of the pre-transmission precoding matrix to the base station.

1-4, reconstruct a precoding matrix according to the indicator of the pre-transmission precoding matrix.

Reconstructing the precoding matrix according to the indicator of the pre-transmission precoding matrix may refer to that the base station determines a reconstructed precoding matrix according to the received indicator of the pre-transmission precoding matrix.

For example, the base station may obtain the reconstructed precoding matrix by a decoding model. The decoding model is a calculation model. For example, the decoding model may be a machine learning model, or a neural network model, etc., which is not limited thereto.

It should be noted that, in the embodiments of the present disclosure, the above-mentioned encoding model and decoding model each may include a model structure and a model parameter. Different model structures or different model parameters constitute different models.

It can be seen from the above that when any one of operations 1-1 to 1-4 changes, it means that the precoding matrix processing mode is updated or switched. Updating or switching the precoding matrix processing mode may include at least one of situations of: a change in a candidate matrix set used for determining the pre-transmission precoding matrix, a change in a mode of determining the indicator of the pre-transmission precoding matrix, a change in an encoding model used for transmitting the indicator of the pre-transmission precoding matrix, and a change in a decoding model used for reconstructing a precoding matrix.

The change in the encoding model includes a change in a model parameter and/or a model structure of the encoding model. The change in the decoding model includes a change in a model parameter and/or a model structure of the decoding model.

In an example, in a case where the precoding matrix processing mode includes all of the above-mentioned operations 1-1 to 1-4, the embodiments of the present disclosure further provide a plurality of types of precoding matrix processing modes. For example, the types of the precoding matrix processing modes may include the following Type 1 to Type 3.

Type 1: the first communication node selects a pre-transmission precoding matrix from the candidate matrix set, and determines an indicator of the precoding matrix, that is, the indicator of the pre-transmission precoding matrix. A second communication node determines a reconstructed precoding matrix according to the indicator of the precoding matrix.

The change in the candidate matrix set means that the precoding matrix processing mode is updated or switched from a mode to another mode. Alternatively, two different candidate matrix sets mean two different precoding matrix processing modes. The change in the mode of determining the indicator of the precoding matrix means that the precoding matrix processing mode is updated or switched from a mode to another mode. Alternatively, two different modes of determining the indicator of the precoding matrix mean two different precoding matrix processing modes.

Type 2: the first communication node determines a radio channel coefficient matrix by measuring a reference signal, and uses a matrix composed of right singular vectors of the radio channel coefficient matrix as the pre-transmission precoding matrix, and determines an indicator of the precoding matrix, i.e., the indicator of the pre-transmission precoding matrix, according to the pre-transmission precoding matrix. The second communication node reconstructs a precoding matrix according to the indicator of the precoding matrix.

The change in the mode of determining the indicator of the precoding matrix means that the precoding matrix processing mode is updated or switched from a mode to another mode. Alternatively, two different modes of determining the indicator of the precoding matrix mean two different precoding matrix processing modes.

For example, the first communication node determines the indicator of the precoding matrix according to the received configuration parameter of the first communication node. The mode of determining the indicator of the precoding matrix is different according to different configuration parameters.

Type 3: the first communication node determines the pre-transmission precoding matrix, obtains encoding information (i.e., information of the pre-transmission precoding matrix, used for the transmission) processed by an encoding model, and transmits the encoding information. The second communication node obtains a reconstructed precoding matrix processed by a decoding model according to the received encoding information.

Different model structures and/or different model parameters of the encoding model mean different encoding models. Different model results and/or different model parameters of the decoding model mean different decoding models.

For example, the change in the encoding model (e.g., a change in an algorithm) means that the precoding matrix processing mode is updated or switched from a mode to another mode. Alternatively, two different encoding models mean two different precoding matrix processing modes. Alternatively, a change in the model structure of the encoding model means that the precoding matrix processing mode is updated or switched from a mode to another mode. Alternatively, two different model structures mean two different precoding matrix processing modes. Alternatively, a change in the model parameter of the encoding model means that the precoding matrix processing mode is updated or switched from a mode to another mode. Alternatively, two model parameters or two different sets of model parameters mean two different precoding matrix processing modes.

For another example, the change in the decoding model (e.g., a change in an algorithm) means that a predecoding matrix processing mode is updated or switched from a mode to another mode. Alternatively, two different decoding models mean two different predecoding matrix processing modes. Alternatively, a change in the model structure of the decoding model means that the predecoding matrix processing mode is updated or switched from a mode to another mode. Alternatively, two different model structures mean two different predecoding matrix processing modes. Alternatively, a change in the model parameter of the decoding model means that the predecoding matrix processing mode is updated or switched from a mode to another mode. Alternatively, two model parameters or two different sets of model parameters mean two different predecoding matrix processing modes.

It should be noted that, in the embodiments of the present disclosure, updating or switching the precoding matrix processing mode may include switching between precoding matrix processing modes with a same type or switching between precoding matrix processing modes with different types.

For example, if the candidate matrix set is updated or switched, and others are not updated or switched, it belongs to the switching between precoding matrix processing modes with a same type.

For another example, if the mode of determining the pre-transmission precoding is switched from a mode of selecting from the candidate matrix set, to a mode of determining by measuring the reference signal, it belongs to the switching between precoding matrix processing modes with different types.

After introducing the precoding matrix processing mode, in order to accurately monitor the precoding matrix processing mode, the embodiments of the present disclosure provide a monitoring method, in which the terminal acquires an association matrix associated with the precoding matrix, and monitors the precoding matrix processing mode according to the association matrix and the pre-transmission precoding matrix.

It should be noted that, the technical solutions provided in the embodiments of the present disclosure may be applied to various communication systems, (for example, an NR communication system, a future evolutional system, or a multi-communication fusion system, etc.).

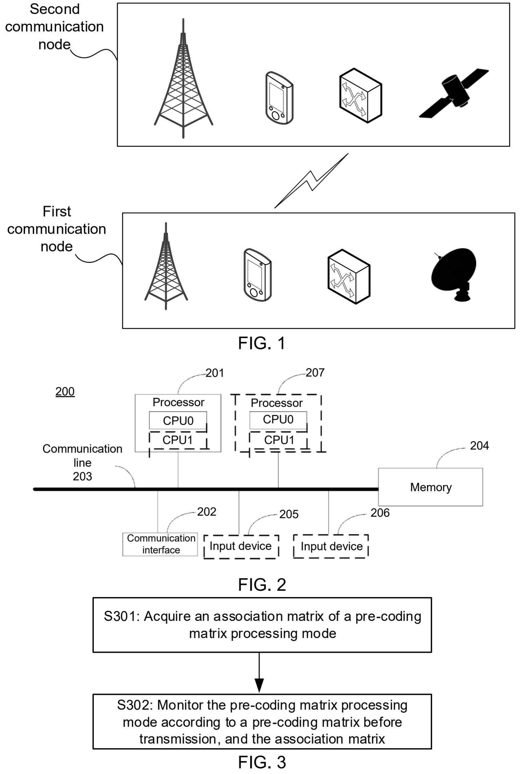

Exemplarily, FIG. 1 is a structural schematic diagram of a communication system according to some embodiments. The communication system may include a second communication node and a first communication node. The first communication node may be communicatively connected with the second communication node. For example, the first communication node may be communicatively connected with the second communication node by a radio channel.

The first communication node may also be referred to as a signal receiving end. The first communication node may monitor the precoding matrix processing mode and report a monitoring value to the second communication node.

The second communication node may be referred to as a signal sending end. The second communication node may transmit a signal or data through a radio channel, by using a precoding matrix based on a plurality of antennas.

In some embodiments, the first communication node may be a terminal, and the second communication node may be a base station. Alternatively, the first communication node and the second communication node are both base stations, or the first communication node and the second communication node are both terminals.

In some other embodiments, the first communication node may be a terminal, and the second communication node may be a wireless router. Alternatively, the first communication node is a repeater and the second communication node is a base station. Alternatively, the first communication node is a terminal and the second communication node is a repeater. Alternatively, the first communication node and the second communication node are both repeaters.

In some other embodiments, the first communication node is a base station and the second communication node is a satellite. Alternatively, the first communication node is a satellite, and the second communication node is a base station. Alternatively, the first communication node is a terminal and the second communication node is a satellite. Alternatively, the first communication node is a satellite and the second communication node is a terminal.

In some other embodiments, the first communication node is a ground device, and the second communication node is an aircraft. Alternatively, the first communication node and the second communication node are both aircrafts.

When the above communication node is a base station, the communication node may also be a network device, or a device with a function of a network device. The communication node may be used to implement functions, such as resource scheduling, radio resource management, and radio access control, etc., of terminal devices. For example, the communication node may be any one of a small base station, a radio access point, a receiving and sending point (transmission receive point, TRP), a transmission point (TP), and some other access nodes.

When the above communication node is a terminal, the communication node may also be a device with a function of a terminal. The terminal may also be referred to as a terminal device, a user equipment (UE), a mobile station, a mobile terminal, etc. The terminal may be a mobile phone, a tablet computer, a computer with a radio transceiver function, a virtual reality terminal device, an augmented reality terminal device, a wireless terminal in industrial control, a wireless terminal in unmanned driving, a wireless terminal in remote surgery, a wireless terminal in transportation safety, a wireless terminal in a smart city, a wireless terminal in a smart home, etc. The embodiments of the present disclosure do not limit the device form used by the terminal.

It should be noted that, FIG. 1 is only an exemplary frame diagram, and a number of nodes and names of the various devices included in FIG. 1 are not limited, and in addition to the functional nodes shown in FIG. 1, the communication system may also include other nodes.

The embodiments of the present disclosure do not limit the application scenarios. The system architectures and the service scenarios described in the embodiments of the present disclosure are provided for more clearly explaining the technical solutions of the embodiments of the present disclosure, and do not constitute a limitation on the technical solutions provided in the embodiments of the present disclosure, and the ordinary skilled in the art may know that with the evolution of the network architectures and the emergence of new service scenarios, the technical solutions provided in the embodiments of the present disclosure are also applicable to similar technical problems.

When implemented, the devices in FIG. 1 may each use the composition structures shown in FIG. 2, or the devices in FIG. 1 may include the components shown in FIG. 2. FIG. 2 is a structural schematic diagram of a communication apparatus 200 according to some embodiments, and the communication apparatus 200 may be the second communication node, or a chip or a system on chip in the second communication node. Alternatively, the communication apparatus 200 may be the first communication node, or a chip or a system on chip in the first communication node. As shown in FIG. 2, the communication apparatus 200 includes a processor 201, a communication interface 202, and a communication line 203.

Furthermore, the communication apparatus 200 may also include a memory 204. The processor 201, the memory 204 and the communication interface 202 may be connected by the communication line 203.

The processor 201 is a central processing unit (CPU), a general-purpose processor, a network processor (NP), a digital signal processor (DSP), a microprocessor, a microcontroller, a programmable logic device (PLD), or any combination thereof. The processor 201 may also be other apparatuses with processing functions (such as a circuit, a device or a software module, which is not limited thereto).

The communication interface 202 is configured to communicate with other devices or other communication networks. The other communication networks may be the Ethernet, radio access network (RAN), wireless local area networks (WLAN), etc. The communication interface 202 may be a module, a circuit, a communication interface, or any apparatus capable of implementing communication.

The communication line 203 is configured to transfer information between the components included in the communication apparatus 200.

The memory 204 is configured to store instructions. The instructions may be a computer program.

The memory 204 may be a read-only memory (ROM) or other types of static storage devices that may store static information and instructions, or a random access memory (RAM) or other types of dynamic storage devices that may store information and instructions, or may also be an electrically erasable programmable read-only memory (EEPROM), a compact disc read-only memory (CD-ROM) or other optical disc storages, optical disc storages (including a compact optical disc, a laser disc, an optical disc, a digital versatile disc, a Blu-ray disc, or the like), a magnetic disk storage medium or other magnetic storage devices, etc., which is not limited thereto.

It should be noted that, the memory 204 may exist independently of the processor 201, or may be integrated with the processor 201. The memory 204 may be configured to store instructions or program codes or some data, etc. The memory 204 may be located inside the communication apparatus 200 or outside the communication apparatus 200, which is not limited thereto. The processor 201 is configured to execute the instructions stored in the memory 204 to implement the monitoring method provided in the embodiments of the present disclosure.

In an example, the processor 201 may include one or more CPUs (e.g., CPU0 and CPU1 in FIG. 2).

As an implementation, the communication apparatus 200 includes a plurality of processors, and for example, in addition to the processor 201 in FIG. 2, the communication apparatus 200 may also include a processor 207. The processor 207 may include one or more CPUs (e.g., CPU0 and CPU1 in FIG. 2).

As an implementation, the communication apparatus 200 further includes an output device 205 and an input device 206. Exemplarily, the input device 206 is a device such as a keyboard, a mouse, a microphone or a joystick, etc., and the output device 205 is a device such as a display screen, or a speaker, etc.

It should be noted that, the communication apparatus 200 may be a desktop computer, a portable computer, a network server, a mobile phone, a tablet computer, a wireless terminal, an embedded device, a chip system or a device with similar structures as shown in FIG. 2. In addition, the component structures shown in FIG. 2 do not constitute a limitation on the various devices in FIG. 1 and FIG. 2, and in addition to the components shown in FIG. 2, the various devices in FIG. 1 and FIG. 2 may include more or fewer components than shown in the figures, or combine certain components, or include different component arrangements.

In the embodiments of the present disclosure, the chip system may be formed by a chip, and the chip system may also include a chip and other discrete devices.

In addition, actions, terms, etc., involved between the various embodiments of the present disclosure may refer to each other, which are not limited thereto. In the embodiments of the present disclosure, message names or parameter names in messages interacted between the various devices, etc., are only examples, and other names may also be used in implementations, which are not limited thereto.

The channel quality indication method provided in the embodiments of the present disclosure is described below in conjunction with the communication system shown in FIG. 1. The actions, terms, etc., involved between the various embodiments of the present disclosure may refer to each other, which are not limited thereto. In the embodiments of the present disclosure, message names or parameter names in messages interacted between the various devices, etc., are only examples, and other names may also be used in implementations, which are not limited thereto. The actions involved in the various embodiments of the present disclosure are only examples, and other names may also be used in implementations, for example: "included/comprised in/on/within" described in the embodiments of the present disclosure may also be replaced by "carried on" or "carried in", etc.

FIG. 3 is a monitoring method according to some embodiments, as shown in FIG. 3. The method may include S301 to S302.

S301, a first communication node acquires an association matrix of a precoding matrix processing mode.

The first communication node may be the first communication node in FIG. 1, or a device (such as a chip or a system on chip) of the first communication node in FIG. 1.

In the embodiments of the present disclosure, the precoding matrix processing mode may refer to a current precoding matrix processing mode. The precoding matrix processing mode may be referred to as a precoding matrix processing operation, a processing mode related to a precoding matrix, a mode of processing a precoding matrix, or other names. For operations included in the precoding matrix processing mode, reference may be made to the descriptions of 1-1 to 1-4 above, which will not be repeated herein.

The association matrix of the precoding matrix processing mode may be used to monitor the precoding matrix processing mode. The association matrix may include one or more groups of matrices, or the association matrix may be replaced by an association matrix group.

In an example, the first communication node may acquire the association matrix of the precoding matrix processing mode according to indication information of a second communication node. The indication information may be used to indicate the association matrix. For example, the indication information may include at least one of 2-1 to 2-4.

2-1, a correspondence between precoding matrix processing modes and the association matrices.

A precoding matrix processing mode corresponds to an association matrix or a group of association matrices, or a group of precoding matrix processing modes corresponds to an association matrix or a group of association matrices.

In an example, the first communication node may select an association matrix (or an association matrix group) corresponding to the precoding matrix from a plurality of candidate association matrix groups according to the correspondence between the precoding matrix processing modes and the association matrices.

The candidate association matrix group may be generated by the first communication node, or the candidate association matrix group may be indicated by other communication nodes (e.g., the second communication node, a third communication node, where the third communication node is different from the second communication node), or the candidate association matrix group may also be configured by default, which is not limited thereto.

2-2, a precoding matrix processing mode corresponding to the association matrix.

In an example, the first communication node may select one or more association matrices (or association matrix groups) corresponding to the indicated precoding matrix processing mode from a plurality of association matrices (or association matrix groups), according to the precoding matrix processing mode indicated by the indication information.

2-3, a number of reference signal ports corresponding to the association matrix.

The number of reference signal ports may be referred to as a number of antenna ports corresponding to the reference signal. That is, the number of reference signal ports refers to the number of antenna ports used for sending the reference signal by the second communication node. A number of reference signal port may correspond to an association matrix or a group of association matrices.

In an example, the first communication node may select an association matrix group corresponding to the number of reference signal ports from the candidate association matrix groups according to the number of reference signal ports.

2-4, a threshold or a group of thresholds.

The threshold may also be referred to as a threshold value. A threshold may correspond to an association matrix or a group of association matrices, or a group of thresholds may correspond to an association matrix or a group of association matrices.

In some embodiments, in a case where the association matrix includes an association matrix group, the indication information may indicate a threshold, or may indicate a threshold combination. Different association matrix groups correspond to different thresholds or threshold combinations, that is, different association matrix groups correspond to different indication information.

In some other embodiments, in a case where the association matrix includes a plurality of association matrix groups, the indication information may indicate a threshold or a threshold combination. The plurality of association matrix groups included in the association matrix are different, so the corresponding thresholds or threshold combinations are also different, that is, the indication information is different.

For example, the first communication node may select an association matrix group corresponding to the indicated threshold, from the candidate association matrix groups, according to the threshold indicated by the indication information.

For another example, the first communication node may select a threshold or a group of thresholds, from candidate thresholds, according to the indication information of the second communication node.

The candidate thresholds may include a plurality of subsequent thresholds or a plurality of subsequent threshold combinations. The indication information may be used to indicate selecting a threshold from candidate thresholds.

For another example, in a case where the indication information indicates the association matrix group, the threshold is determined according to a feature value of a matrix in the association matrix group. For example, the threshold is a maximum feature value of a matrix in the association matrix group, or a ratio between the maximum feature value and an average feature value of matrices in the association matrix group.

S302, the first communication node monitors the precoding matrix processing mode according to a pre-transmission precoding matrix and the association matrix.

Monitoring the precoding matrix processing mode may include: updating or switching the precoding matrix processing mode, and maintaining (e.g., not switching or not updating) the precoding matrix processing mode. Updating or switching the precoding matrix processing mode may include any one of operations included in the updating or switching the precoding matrix processing mode. For example, the operations included in the precoding matrix processing mode may include one or more of the above-mentioned operations 1-1 to 1-4.

In an implementation, the first communication node may monitor the precoding matrix processing mode according to a similarity or a similarity metric value between the pre-transmission precoding matrix and the association matrix.

The similarity metric value between the pre-transmission precoding matrix and the association matrix may be positively proportional to or negatively proportional to the similarity between the pre-transmission precoding matrix and the association matrix.

In some embodiments, in a case where the similarity metric value between the pre-transmission precoding matrix and the association matrix is negatively proportional to the similarity between the pre-transmission precoding matrix and the association matrix, the similarity metric value between the pre-transmission precoding matrix and the association matrix may be represented as a distance between the two matrices. The distance may be a first norm distance, a second norm distance, a chord distance, etc.

In the embodiments of the present disclosure, in a case where the similarity metric value between the pre-transmission precoding matrix and the association matrix is negatively proportional to the similarity between the pre-transmission precoding matrix and the association matrix, if the similarity is higher than a specific threshold, the similarity metric value is lower than a specific threshold. If the similarity is lower than a specific threshold, the similarity metric value is higher than a specific threshold.

In some other embodiments, in a case where the similarity metric value between the pre-transmission precoding matrix and the association matrix is positively proportional to the similarity between the pre-transmission precoding matrix and the association matrix, the similarity metric value between the pre-transmission precoding matrix and the association matrix may be a projection value, an inner product, a cosine similarity, or the power of the cosine similarity, between the two matrices.

In the embodiments of the present disclosure, in a case where the similarity metric value between the pre-transmission precoding matrix and the association matrix is negatively proportional to the similarity between the pre-transmission precoding matrix and the association matrix, if the similarity is higher than a specific threshold, the similarity metric value is higher than a specific threshold. If the similarity is lower than a specific threshold, the similarity metric value is also lower than a specific threshold.

In an example, in a case where the similarity metric value between the pre-transmission precoding matrix and the association matrix group includes a value, the similarity metric value between the pre-transmission precoding matrix and the association matrix group may include any one of: a maximum value in a plurality of similarity metric values between the pre-transmission precoding matrix and matrices of the association matrix group, a minimum value in the plurality of similarity metric values between the pre-transmission precoding matrix and the matrices of the association matrix group, and an average value of the plurality of similarity metric values between the pre-transmission precoding matrix and the matrices of the association matrix group.

In another example, in a case where the similarity metric value between the pre-transmission precoding matrix and the association matrix group includes a plurality of values, the similarity metric value between the pre-transmission precoding matrix and the association matrix group may include any one of the following combinations of: the maximum value and the minimum value among the plurality of similarity metric values between the pre-transmission precoding matrix and the matrices of the association matrix group, the maximum value and the average value among the plurality of similarity metric values between the pre-transmission precoding matrix and the matrices of the association matrix group, and the minimum value and the average value among the plurality of similarity metric values between the pre-transmission precoding matrix and the matrices of the association matrix group.

In an implementation, taking an example in which a first communication node monitors the precoding matrix processing mode according to the similarity metric value between the pre-transmission precoding matrix and the association matrix, the first communication node may determine a monitoring value of the precoding matrix processing mode according to the similarity metric value between the pre-transmission precoding matrix and the association matrix, and monitor the precoding matrix processing mode according to the monitoring value.

The monitoring value may also be referred to as a monitoring result. The monitoring value may be used to represent a comparison result of the similarity metric value between the pre-transmission precoding matrix and the association matrix, to a preset threshold value. For example, the monitoring value may include the similarity metric value being greater than the preset threshold, the similarity metric value being less than or equal to the preset threshold, or the monitoring value may include the similarity metric value being greater than or equal to the preset threshold, the similarity metric value being less than the preset threshold.

Based on the technical solution of FIG. 3, since the association matrix is related to the precoding matrix processing mode, the first communication node, may monitor the precoding matrix processing mode according to the association matrix of the precoding matrix processing mode and the pre-transmission precoding matrix, and further, may determine whether the precoding matrix processing mode needs to be updated or switched.

In some embodiments, in the above-mentioned S302, the first communication node monitoring the precoding matrix processing mode according to the monitoring value may include Mode 1 and Mode 2.

Mode 1: the first communication node monitors the precoding matrix processing mode according to the monitoring value.

The first communication node monitoring the precoding matrix processing mode according to the monitoring value may include that, for example: the first communication node updates or switches the precoding matrix processing mode according to the monitoring value, or the first communication node maintains the precoding matrix processing mode according to the monitoring value.

In an example, the first communication node may determine whether the pre-transmission precoding matrix is within a normal range of the precoding matrix processing mode, according to the monitoring value. If the pre-transmission precoding matrix is within the normal processing range of the precoding matrix processing mode, the first communication node may update or switch the precoding matrix processing mode. If the pre-transmission precoding matrix is not within the normal range of the precoding matrix processing mode, the first communication node may maintain the precoding matrix processing mode.

In some embodiments, for example, the association matrix is obtained easily. In a case where the monitoring value is used to represent the similarity metric value between the pre-transmission precoding matrix and the association matrix is greater than or equal to the preset threshold value, it means that the pre-transmission precoding matrix is within the normal processing range of the precoding matrix processing mode, and the first communication node may maintain the precoding matrix processing mode. In a case where the monitoring value is used to represent the similarity metric value between the pre-transmission precoding matrix and the association matrix is less than the preset threshold value, it means that the pre-transmission precoding matrix is not within the normal processing range of the precoding matrix processing mode, and the first communication node may update or switch the precoding matrix processing mode.

Alternatively, in a case where the monitoring value is used to represent the similarity metric value between the pre-transmission precoding matrix and the association matrix is greater than the preset threshold value, it means that the pre-transmission precoding matrix is within the normal processing range of the precoding matrix processing mode, and the first communication node may maintain the precoding matrix processing mode. In a case where the monitoring value is used to represent the similarity metric value between the pre-transmission precoding matrix and the association matrix is less than or equal to the preset threshold value, it means that the pre-transmission precoding matrix is not within the normal processing range of the precoding matrix processing mode, and the first communication node may update or switch the precoding matrix processing mode.

In some other embodiments, for example, the association matrix is obtained easily. In a case where the monitoring value is used to represent the similarity metric value between the pre-transmission precoding matrix and the association matrix is greater than or equal to the preset threshold value, it means that the pre-transmission precoding matrix is not within the normal processing range of the precoding matrix processing mode, and the first communication node may update or switch the precoding matrix processing mode. In a case where the monitoring value is used to represent the similarity metric value between the pre-transmission precoding matrix and the management matrix is less than the preset threshold value, it means that the pre-transmission precoding matrix is within the normal processing range of the precoding matrix processing mode, and the first communication node may maintain the precoding matrix processing mode.

Alternatively, in a case where the monitoring value is used to represent the similarity metric value between the pre-transmission precoding matrix and the association matrix is greater than the preset threshold value, it means that the pre-transmission precoding matrix is not within the normal processing range of the precoding matrix processing mode, and the first communication node may update or switch the precoding matrix processing mode. In a case where the monitoring value is used to represent the similarity metric value between the pre-transmission precoding matrix and the association matrix is less than or equal to the preset threshold value, it means that the pre-transmission precoding matrix is within the normal processing range of the precoding matrix processing mode, and the first communication node may maintain the precoding matrix processing mode.

The pre-transmission precoding matrix being within the normal processing range of the precoding matrix processing mode mentioned above may be replaced by, for example: representing the association matrix group that may be normally processed by the precoding matrix processing mode. The pre-transmission precoding matrix being not within the normal processing range of the precoding matrix processing mode may be replaced by: representing the association matrix group that may not be normally processed by the precoding matrix processing mode.

The association matrix being obtained easily may refer to that a duration for the first communication node to acquire the association matrix is less than a preset duration, or the first communication node consumes fewer resources to acquire the association matrix. For example, if the first communication node is configured with the association matrix, the first communication node may quickly acquire the association matrix, that is, the first communication node may easily acquire the association matrix. For another example, the first communication node may quickly acquire the association matrix according to indication information of other nodes, and in this case, the first communication node does not need to be pre-configured with a plurality of association matrices, thereby saving storage space.

Mode 2: the first communication node sends the monitoring value to the second communication node, and monitors the precoding matrix processing mode according to the indication information of the second communication node.

The indication information may be used to indicate updating or switching the precoding matrix processing mode, or the indication information may be used to indicate maintaining the precoding matrix processing mode.

In an example, the second communication node, after receiving the monitoring value from the first communication node, may determine whether to update or switch the precoding matrix processing mode according to the monitoring value, and send the indication information to the first communication node, so that the first communication node may determine whether to update or switch the precoding matrix processing mode according to the indication information. For the method that the second communication node determines whether to update or switch the precoding matrix processing mode according to the monitoring value, reference may be made to the description in the above-mentioned Mode 1, which will not be repeated herein.

Furthermore, in a case where the second communication node determines to update or switch the precoding matrix processing mode according to the monitoring value, the second communication node may also update or switch the precoding matrix processing mode.

Based on the technical solution of this embodiment, the first communication node may determine whether the pre-transmission precoding matrix is within the normal range of the precoding matrix processing mode according to the monitoring value, and then determine whether to update or switch the precoding matrix processing mode.

In some embodiments, the second communication node, after receiving the monitoring value from the first communication node, may update or switch the precoding matrix processing mode in a case of determining to update or switch the precoding matrix processing mode according to the monitoring value. In a case of determining to maintain the precoding matrix processing mode according to the monitoring value, the second communication node may maintain the precoding matrix processing mode.

Based on this embodiment, the second communication node may determine whether to update or switch the precoding matrix processing mode according to the monitoring value.

In some embodiments, in the embodiments of the present disclosure, the monitoring value may include a plurality of monitoring values. For example, the monitoring value may include a first monitoring value and a second monitoring value.

In an example, the first monitoring value may be used to represent a comparison result of the similarity metric value between the pre-transmission precoding matrix and the association matrix, to a first threshold value. The second monitoring value may be used to represent a comparison result of the similarity metric value between the pre-transmission precoding matrix and the association matrix, to a second threshold value. The first threshold value is different from the second threshold value.

In another example, in a case where the association matrix includes a group of association matrices, the similarity metric value between the pre-transmission precoding matrix and the association matrix includes a first similarity metric value and a second similarity metric value. The first monitoring value may be used to represent a comparison result between the first similarity metric value and a third threshold value. The second monitoring value may be used to represent a comparison result between the second similarity metric value and a fourth threshold value. The third threshold value and the fourth threshold value may be the same or different.

The first similarity metric value may be an average value of similarity metric values between the pre-transmission precoding matrix and the matrices in the association matrix group, and the second similarity may be a maximum value or a minimum value of similarity metric values between the pre-transmission precoding matrix and the matrices in the association matrix group.

In the embodiments of the present disclosure, the average value of the similarity metric values between the pre-transmission precoding matrix and the matrices in the association matrix group is highly correlated with the model structure of the precoding matrix processing mode. The maximum value or the minimum value of the similarity metric values between the pre-transmission precoding matrix and the matrices in the association matrix group is highly correlated with the model parameter of the precoding matrix processing mode.

In this way, by monitoring the model structure of the precoding matrix processing mode according to the average value of the similarity metric values between the pre-transmission precoding matrix and the matrices in the association matrix group, and monitoring the model parameter of the precoding matrix processing mode according to the maximum value or minimum value of the similarity metric values between the pre-transmission precoding matrix and the matrices in the association matrix group, the precoding matrix processing mode may be accurately monitored and controlled.

In an implementation, the first communication node may monitor the precoding matrix processing mode of the first communication node according to the first monitoring value, and send the second monitoring value to the second communication node. In this way, the second communication node may monitor the precoding matrix processing mode of the second communication node according to the second monitoring value. That is, the first communication node and the second communication node may respectively use an association matrix to monitor their own precoding matrix processing mode, thereby saving the overhead of the first communication node and the second communication node when updating or switching the precoding matrix processing mode.

In some embodiments, in combination with the embodiments of the above Mode 1, the first communication node may determine whether the pre-transmission precoding matrix is within the normal processing range of the precoding matrix processing mode according to the first monitoring value. The second communication node may determine whether the pre-transmission precoding matrix is within the normal processing range of the precoding matrix processing mode according to the second monitoring value. For the detailed determination method, reference may be made to the description of the above Mode 1, which will not be repeated herein.

For example, when the first monitoring value is used to represent that the pre-transmission precoding matrix is within the normal processing range of the precoding matrix processing mode, the first communication node may maintain the precoding matrix processing mode. When the first monitoring value is used to represent that the pre-transmission precoding matrix is not within the processing range of the precoding matrix, the first communication node may update or switch the precoding matrix processing mode.

Similarly, when the second monitoring value is used to represent that the pre-transmission precoding matrix is within the normal processing range of the precoding matrix processing mode, the second communication node may maintain the precoding matrix processing mode. When the second monitoring value is used to represent that the pre-transmission precoding matrix is not within the processing range of the precoding matrix, the second communication node may update or switch the precoding matrix processing mode.

In another implementation, the first communication node or the second communication node may monitor the precoding matrix processing mode of the first communication node according to the first monitoring value and the second monitoring value.

In an example, the first communication node may monitor the model structure of the precoding matrix processing mode according to the first monitoring value, and the first communication node may monitor the model parameter of the precoding matrix processing mode according to the second monitoring value.

For example, in a case where the first monitoring value and the second monitoring value are both used to represent that the pre-transmission precoding matrix is not within the normal processing range of the precoding matrix processing mode, the first communication node may update or switch the model structure of the encoding model of the precoding matrix processing mode according to the first monitoring value, and update or switch the model parameter of the encoding model of the precoding matrix processing mode according to the second monitoring value.

For another example, in a case where the first monitoring value and the second monitoring value are both used to represent that the pre-transmission precoding matrix is within the normal processing range of the precoding matrix processing mode, the first communication node may maintain the model structure and model parameter of the encoding model of the precoding matrix.

For another example, in a case where the first monitoring is used to represent that the pre-transmission precoding matrix is not within the normal processing range of the precoding matrix processing mode, and the second monitoring value is used to represent that the pre-transmission precoding matrix is within the normal processing range of the precoding matrix processing mode, the first communication node may update or switch the model structure of the encoding model of the precoding matrix processing mode according to the first monitoring value, and the first communication node may maintain the model parameter of the encoding model of the precoding matrix processing mode according to the second monitoring value.

For another example, in a case where the first monitoring is used to represent that the pre-transmission precoding matrix is within the normal processing range of the precoding matrix processing mode, and the second monitoring value is used to represent that the pre-transmission precoding matrix is not within the normal processing range of the precoding matrix processing mode, the first communication node may maintain the model structure of the encoding model of the precoding matrix processing mode according to the first monitoring value, and the first communication node may update or switch the model parameter of the encoding model of the precoding matrix processing mode according to the second monitoring value.

In yet another implementation, the second communication node may monitor the precoding matrix processing mode of the second communication node according to the first monitoring value and the second monitoring value. For example, reference may be made to the relevant description of the previous implementation, which will not be repeated herein.

Based on the implementation of this embodiment, different operations in the precoding matrix processing mode may be monitored respectively by two monitoring values, which may effectively reduce the overhead in updating or switching the precoding matrix processing mode.

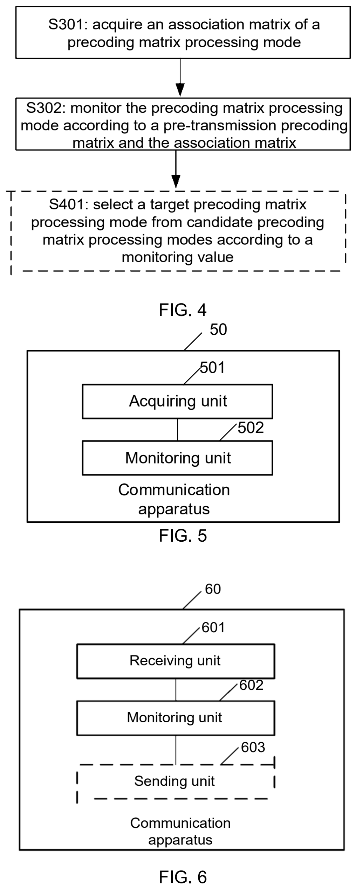

In some other embodiments, as shown in FIG. 4, the method provided in the embodiments of the present disclosure may further include S401.

S401, the first communication node selects a target precoding matrix processing mode from candidate precoding matrix processing modes according to a monitoring value.

The candidate precoding matrix processing modes may include a plurality of precoding matrix processing modes of or a plurality of groups of precoding matrix processing modes. The plurality of precoding matrix processing modes include the target precoding matrix processing mode.

The target precoding matrix processing mode may refer to a precoding matrix that satisfies a requirement. That is, the first communication node may switch or update the precoding matrix processing mode to the target precoding matrix processing mode. The target precoding matrix may also be a precoding matrix that does not satisfy the requirement, that is, the first communication node may switch or update the precoding matrix processing mode to other precoding matrix processing modes other than the target precoding matrix processing mode among the candidate precoding matrix processing modes.

In yet another example, the first communication node may determine the target precoding matrix processing mode according to configuration information of the second communication node.

For example, the configuration information of the second communication node may include being used to indicate the candidate precoding matrix processing modes and the association matrix of the candidate precoding matrix processing modes. For example, the configuration information of the second communication node may include indication information used to indicate the candidate precoding matrix processing modes and used to the association matrix of the candidate precoding matrix processing modes.

A candidate precoding matrix processing mode corresponds to an association matrix group, or a group of candidate precoding matrix processing modes corresponds to an association matrix group.

The first communication node may determine the candidate precoding matrix processing modes according to the indication information used to indicate the candidate precoding matrix processing modes, and the first communication node may determine the association matrix according to the association matrix used to indicate the candidate precoding matrix processing modes. The first communication node may determine the monitoring value for selecting the target precoding matrix processing mode from the candidate precoding matrix processing modes, according to the similarity metric value between the pre-transmission precoding matrix and the association matrix.

In an example, the target precoding matrix processing mode may include any one or more of: a precoding matrix processing mode corresponding to a matrix with a largest similarity metric value to the pre-transmission precoding matrix, in an association matrix group, a precoding matrix processing mode corresponding to a matrix with a larger similarity metric value or a smaller similarity metric value among a plurality of similarity metric values between an association matrix group and the pre-transmission precoding matrix, and a precoding matrix processing mode or a group of precoding matrix processing modes corresponding to a matrix with a similarity metric value greater than or less than a preset value among a plurality similarity metric values between an association matrix group and the pre-transmission precoding matrix. The preset value may be set as needed, which is not limited thereto.

The association matrix group includes a plurality of association matrices. The similarity metric value between the association matrix group and the pre-transmission precoding matrix may refer to the similarity metric value between the pre-transmission precoding matrix and each association matrix in the association matrix group.

The precoding matrix processing mode corresponding to the matrix with the larger similarity metric value or the smaller similarity metric value among the plurality of similarity metric values between the association matrix group and the pre-transmission precoding matrix may include a preset number of precoding matrix processing modes in the top of the order in which the plurality of similarity metric values are sorted from large to small or sorted from small to large, as the target precoding matrix processing mode. The preset number may be set as needed, which is not limited thereto.

Based on the technical solution of FIG. 4, the first communication node, in a case of determining to update or switch the precoding matrix processing mode, may accurately select the precoding matrix processing mode that can be switched or cannot be switched from the candidate precoding matrix processing modes according to the monitoring value, and the first communication node implements the updating or switching of the precoding matrix processing mode according to a selection result.

In some embodiments, the second communication node may also select a precoding matrix that satisfies or does not satisfy the requirement from candidate precoding matrix processing modes according to the monitoring value, and the second communication node updates or switches the precoding matrix processing mode according to a selection result. For example, reference may be made to the description of the embodiment shown in FIG. 4 above, which will not be repeated herein.

Based on this embodiment, in a case of determining to update or switch the precoding matrix processing mode, the second communication node may select a suitable precoding matrix processing mode from the candidate precoding matrix processing modes according to the monitoring value, thereby implementing the updating or switching of the precoding matrix processing mode.

In some embodiments, in a case where the first communication node and the second communication node initially establish a communication connection, the first communication node and the second communication node may determine an initial precoding matrix processing mode.

In an example, the initial precoding matrix processing mode of the first communication node and the second communication node may be configured by default.

In another example, the initial precoding matrix processing mode of the first communication node and the second communication node may be selected from the candidate precoding matrix processing modes.

Based on the technical solutions of this embodiment, in a case where the first communication node and the second communication node initially establish the communication connection, the first communication node and the second communication node may select a suitable initial precoding matrix processing mode from the candidate precoding matrix processing modes, thereby improving data transmission efficiency.

The various solutions in the above embodiments of the present disclosure may be combined without contradiction.

The embodiments of the present disclosure may divide a signal detection apparatus into functional modules or functional units according to the above method examples; for example, various functional modules or functional units may be divided corresponding to various functions, or two or more functions may also be integrated into a processing module. The above integrated module may be implemented in the form of hardware or may be implemented in the form of a software functional module or functional unit. The division of the modules or units in the embodiments of the present disclosure is schematic, which is only a logical functional division, and there may be other divisions in actual implementations.

In a case where various functional modules are divided corresponding to various functions, FIG. 5 shows a structural schematic diagram of a communication apparatus 50, and the communication apparatus 50 may be configured to perform the functions involved in the first communication node in the above embodiments. The communication apparatus 50 shown in FIG. 5 may include an acquiring unit 501 and a monitoring unit 502.

The acquiring unit 501 is configured to acquire an association matrix of a precoding matrix processing mode;
the monitoring unit 502 is configured to monitor the precoding matrix processing mode according to a pre-transmission precoding matrix and the association matrix.

In an example, the monitoring unit 502 is configured to determine a monitoring value of the precoding matrix processing mode according to a similarity metric value between the pre-transmission precoding matrix and the association matrix, where the monitoring value is used to represent a comparison result between the similarity metric value and a preset threshold value; and monitor the precoding matrix processing mode according to the monitoring value.

In an example, the monitoring unit 502 is further configured to update or switch the precoding matrix processing mode according to the monitoring value; or, to maintain the precoding matrix processing mode according to the monitoring value.

In an example, the monitoring unit 502 is further configured to send the monitoring value to a second communication node.

In an example, the acquiring unit 501 is further configured to receive first indication information from the second communication node, where the first indication information is used to indicate updating or switching the precoding matrix processing mode, or the first indication information is used to maintain the precoding matrix processing mode. The monitoring unit 502 is configured to monitor the precoding matrix processing mode according to the first indication information.

In an example, updating or switching the precoding matrix processing mode includes: updating or switching any one of operations included in the precoding matrix processing mode. The precoding matrix processing mode includes at least one of the operations of: determining the pre-transmission precoding matrix; determining an indicator of the pre-transmission precoding matrix; transmitting an indicator of the pre-transmission precoding matrix; reconstructing a precoding matrix according to an indicator of the pre-transmission precoding matrix.

In an example, updating or switching the precoding matrix processing mode includes at least one of situations of: a change in a candidate matrix set used for determining the pre-transmission precoding matrix; a change in a mode of determining an indicator of the pre-transmission precoding matrix; a change in an encoding model used for transmitting an indicator of the pre-transmission precoding matrix, where the change in the encoding model includes a change in a model parameter of the encoding model and/or a change in a model structure of the encoding model; a change in a decoding model used for reconstructing a precoding matrix, where the change in the decoding model includes a change in a model parameter of the decoding model and/or a change in a model structure of the decoding model.

In an example, the association matrix includes a group of association matrices or a plurality of groups of association matrices; and the similarity metric value between the pre-transmission precoding matrix and the association matrix includes at least one of: a maximum value of similarity metric values between the pre-transmission precoding matrix and matrices in the association matrix; a minimum value of similarity metric values between the pre-transmission precoding matrix and matrices in the association matrix; and an average value of similarity metric values between the pre-transmission precoding matrix and matrices in the association matrix.

In an example, the monitoring unit 502 is configured to determine whether the pre-transmission precoding matrix is within a normal processing range of the precoding matrix processing mode according to the monitoring value. In response to the pre-transmission precoding matrix being not within the normal processing range, the precoding matrix processing mode is updated or switched.

In an example, the monitoring unit 502 is configured to: determine that the pre-transmission precoding matrix is within the normal processing range, in a case where the monitoring value represents that the similarity metric value is greater than or equal to a preset threshold value; or determine that the pre-transmission precoding matrix is not within the normal range, in a case where the monitoring value represents that the similarity metric value is less than or equal to the preset threshold value.

In an example, the monitoring value includes a first monitoring value and a second monitoring value, and the first monitoring value and the second monitoring value are respectively used to monitor different operations in the precoding matrix processing mode of the first communication node; or the first monitoring value is used to monitor the precoding matrix processing mode of the first communication node, and the second monitoring value is used to monitor a precoding matrix processing mode of a second communication node.

In an example, the first monitoring value is used to represent a comparison result between the similarity metric value and a first threshold value, and the second monitoring value is used to represent a comparison result between the similarity metric value and a second threshold value; or the similarity metric value includes a first similarity metric value and a second similarity metric value, the first monitoring value is used to represent a comparison result between the first similarity metric and a third threshold value, the second monitoring value is used to represent a comparison result between the second similarity metric value and a fourth threshold value, and the third threshold value and the fourth threshold value are the same or different.

In an example, the monitoring unit 502 is configured to switch a model structure of an encoding model according to the first monitoring value; and/or switch a model parameter of an encoding model according to the second monitoring value.

In an example, the acquiring unit 501 is configured to receive second indication information of a second communication node, where the second indication information is used to indicate the association matrix; and acquire the association matrix according to the second indication information.

In an example, the second indication information includes at least one piece of information of: a correspondence between precoding matrix processing modes and association matrices; where a precoding matrix processing mode corresponds to an association matrix or a group of association matrices; or a group of precoding matrix processing modes corresponds to an association matrix or a group of association matrices; a precoding matrix processing mode corresponding to the association matrix; a threshold or a group of thresholds; a number of reference signal ports corresponding to the association matrix.

In an example, the acquiring unit 501 is configured to select the association matrix from a candidate matrix according to the second indication information.

In an example, the candidate matrix group is generated by the first communication node; or the candidate matrix group is configured by default; or
the candidate matrix group is indicated by the second communication node or a third communication node.

In an example, the monitoring unit 502 is configured to select a target precoding matrix processing mode from candidate precoding matrix processing modes according to the monitoring value.

In an example, the target precoding matrix processing mode includes any one of: a precoding matrix processing mode corresponding to a matrix with a largest similarity metric value to the pre-transmission precoding matrix, in an association matrix group; a precoding matrix processing mode corresponding to a matrix with a larger similarity metric value or a smaller similarity metric value among a plurality of similarity metric values between an association matrix group and the pre-transmission precoding matrix; a precoding matrix processing mode corresponding to a matrix with a similarity metric value greater than or less than a preset value among a plurality similarity metric values between an association matrix group and the pre-transmission precoding matrix.

As another implementation, the acquiring unit 501 in FIG. 5 may be replaced by a communication interface, and the communication interface may integrate the functions of the acquiring unit 501.

Furthermore, when the acquiring unit 501 is replaced by a processor, the communication apparatus 50 involved in the embodiments of the present disclosure may be the communication apparatus shown in FIG. 2.

In a case where various functional modules are divided corresponding to various functions, FIG. 6 shows a structural schematic diagram of a communication apparatus 60, and the communication apparatus 60 may be configured to perform the functions involved in the second communication node in the above embodiments. The communication apparatus 60 shown in FIG. 6 may include a receiving unit 601 and a monitoring unit 602.

The receiving unit 601 is configured to receive a monitoring value from a first communication node, where the monitoring value is determined according to a similarity metric value between a pre-transmission precoding matrix and an association matrix of a precoding matrix processing mode.

The monitoring unit 602 is configured to receive the monitoring value from the first communication node, where the monitoring value is determined according to the similarity metric value between the pre-transmission precoding matrix and the association matrix, and the association matrix corresponds to the precoding matrix processing mode.

In an example, as shown in FIG. 6, the apparatus may further include a sending unit 603, configured to send first indication information to the first communication node, where the first indication information is used to indicate updating or switching the precoding matrix processing mode, or the first indication information is used to indicate maintaining the precoding matrix processing mode.

In an example, updating or switching the precoding matrix processing mode includes: updating or switching any one of operations included in the precoding matrix processing mode; where the precoding matrix processing mode includes at least one of the operations of: determining the pre-transmission precoding matrix; determining an indicator of the pre-transmission precoding matrix; transmitting an indicator of the pre-transmission precoding matrix; reconstructing a precoding matrix according to an indicator of the pre-transmission precoding matrix.

In an example, updating or switching the precoding matrix processing mode includes at least one of situations of: a change in a candidate matrix set used for determining the pre-transmission precoding matrix; a change in a mode of determining an indicator of the pre-transmission precoding matrix; a change in an encoding model used for transmitting an indicator of the pre-transmission precoding matrix, where the change in the encoding model includes a change in a model parameter of the encoding model and/or a change in a model structure of the encoding model; a change in a decoding model used for reconstructing the precoding matrix, where the change in the decoding model includes a change in a model parameter of the decoding model and/or a change in a model structure of the decoding model.

In an example, the association matrix includes a group of association matrices or a plurality of groups of association matrices; and the similarity metric value between the pre-transmission precoding matrix and the association matrix includes at least one of: a maximum value of similarity metric values between the pre-transmission precoding matrix and matrices in the association matrix; a minimum value of similarity metric values between the pre-transmission precoding matrix and matrices in the association matrix; and an average value of similarity metric values between the pre-transmission precoding matrix and matrices in the association matrix.

In an example, the monitoring unit 602 is configured to determine whether the pre-transmission precoding matrix is within a normal processing range of the precoding matrix processing mode according to the monitoring value; where in response to the pre-transmission precoding matrix being not within the normal processing range, the precoding matrix processing mode is updated or switched.

In an example, the monitoring unit 602 is configured to: determine that the pre-transmission precoding matrix is within the normal processing range, in a case where the monitoring value represents that the similarity metric value is greater than or equal to a preset threshold value; or determine that the pre-transmission precoding matrix is not within the normal range, in a case where the monitoring value represents that the similarity metric value is less than or equal to the preset threshold.

In an example, the monitoring value includes a first monitoring value and a second monitoring value, and the first monitoring value and the second monitoring value are respectively used to monitor different operations in the precoding matrix processing mode of the first communication node; or the first monitoring value is used to monitor the precoding matrix processing mode of the first communication node, and the second monitoring value is used to monitor a precoding matrix processing mode of a second communication node.

In an example, the first monitoring value is used to represent a comparison result between the similarity metric value and a first threshold value, and the second monitoring value is used to represent a comparison result between the similarity metric value and a second threshold value; or the similarity metric value includes a first similarity metric value and a second similarity metric value, the first monitoring value is used to represent a comparison result between the first similarity metric and a third threshold value, the second monitoring value is used to represent a comparison result between the second similarity metric value and a fourth threshold value, and the third threshold value and the fourth threshold value are the same or different.

In an example, the monitoring unit 602 is configured to switch a model structure of an encoding model according to the first monitoring value; and/or switch a model parameter of an encoding model according to the second monitoring value.

In an example, the sending unit 603 is further configured to send second indication information to the first communication node, where the second indication information is used to indicate the association matrix.

In an example, the second indication information includes at least one piece of information of: a correspondence between precoding matrix processing modes and association matrices; where a precoding matrix processing mode corresponds to an association matrix or a group of association matrices; or a group of precoding matrix processing modes corresponds to an association matrix or a group of association matrices; a precoding matrix processing mode corresponding to the association matrix; a threshold or a group of thresholds; a number of reference signal ports corresponding to the association matrix.

In an example, the monitoring unit 602 is configured to select a target precoding matrix processing mode from candidate precoding matrix processing modes according to the monitoring value.

In an example, the target precoding matrix processing mode includes at least one of: a precoding matrix processing mode corresponding to a matrix with a largest similarity metric value to the pre-transmission precoding matrix, in an association matrix group; a precoding matrix processing mode corresponding to a matrix with a larger similarity metric value or a smaller similarity metric value among a plurality of similarity metric values between an association matrix group and the pre-transmission precoding matrix; a precoding matrix processing mode corresponding to a matrix with a similarity metric value greater than or less than a preset value among a plurality similarity metric values between an association matrix group and the pre-transmission precoding matrix.

As another implementation, the receiving unit 601 and the sending unit 603 in FIG. 6 may be replaced by a communication interface, and the communication interface may integrate the functions of the receiving unit 601 and the sending unit 603.

Furthermore, in an example, when replaced by the communication interface, the communication apparatus 60 involved in the embodiments of the present disclosure may be the communication apparatus shown in FIG. 2.

The embodiments of the present disclosure further provide a computer readable storage medium. All or a part of the procedures in the method embodiments mentioned above may be completed by related hardware instructed by a computer program. The program may be stored in above-mentioned computer readable storage medium. The program, when executed, may include procedures of the various method embodiments described above. The computer readable storage medium may be an internal storage unit of the signal detection apparatus (including the data sending end and/or the data receiving end) of any one of the aforementioned embodiments, such as a hard disk or a memory of the signal detection apparatus. The above-mentioned computer readable storage medium may also be an external storage device of the above-mentioned terminal apparatus, such as a plug-in hard disk, a smart memory card (smart media card, SMC), a secure digital (SD) card, a flash card, etc., equipped on the above-mentioned terminal apparatus. Furthermore, the above-mentioned computer readable storage medium may also include both an internal storage unit and an external storage device of the above-mentioned signal detection apparatus. The above-mentioned computer readable storage medium is used to store the above-mentioned computer program, and other programs and data required for the above-mentioned signal detection apparatus. The above-mentioned computer readable storage medium may also be used to temporarily store data that has been output or is to be output. The described readable storage medium includes a non-transitory computer readable storage medium.

It should be noted that, the terms such as "first" and "second", etc., in the description and claims and the drawings of the present disclosure are used for distinguishing different objects, but not used for describing a specific order. Furthermore, the terms "comprise/include/contain" and "have" and any derivations thereof are intended to cover non-exclusive inclusion. For example, a process, method, system, product or device that contains a series of steps or units is not limited to the listed steps or units, but for example also includes steps or units that are not listed, or for example also includes other steps or units inherent to the process, method, product or device.

From the description of the above implementations, those skilled in the art may clearly understand that, for convenience and brevity of description, the division of the above-mentioned various functional modules is illustrated only by way of an example, and in actual applications, the above-mentioned functions may be allocated to be completed by different functional modules as needed, that is, an internal structure of the apparatus is divided into different functional modules to complete all or a part of the functions mentioned above.

In several embodiments provided in the present disclosure, it should be understood that, the disclosed apparatuses and methods may be implemented in other ways. For example, the apparatus embodiments described above are merely exemplary, for example, the division of the modules or units is only a logical functional division, and there may be other divisions in actual implementations; for example, a plurality of units or components may be combined or integrated into another apparatus, or some features may be ignored or not performed. On the other hand, the mutual coupling or direct coupling or communication connection shown or discussed may be an indirect coupling or communication connection by some interfaces, apparatuses or units, and may be electrical, mechanical or in other forms.

The units described as separate components may be or may not be physically separated, and the component shown as the unit may be a physical unit or a plurality of physical units, that is, it may be located in a place, or may be distributed to a plurality of different places. A part or all of the units may be selected according to actual needs to achieve the purposes of the solutions in the embodiments.

In addition, the various functional units in the various embodiments of the present disclosure may be integrated into a processing unit, or the various units may exist separately and physically, or two or more units may be integrated into a unit. The above-mentioned integrated unit may be implemented in the form of hardware or may be implemented in the form of a software functional unit.

If the integrated unit is implemented in the form of a software functional unit, and sold or used as an independent product, the integrated unit may be stored in a readable storage medium. Based on this understanding, the technical solutions of the embodiments of the present disclosure may be essentially, or a part of the technical solutions that contributes to the some technologies, or a part of all of the technical solutions, may be embodied in the form of a software product, and the software product is stored in a storage medium, and includes a plurality of instructions to cause a device (which may be a single-chip, a chip, etc.) or processor to perform a part or all of the steps of the methods of various embodiments of the present disclosure. The aforementioned storage media includes various types of medium capable of storing program codes, such as: a U disk (USB flash disk), a mobile hard disk, a read-only memory (ROM), a random access memory (RAM), a magnetic disk or an optical disk, etc.

The aforementioned descriptions are merely specific implementations of the present disclosure, but the protection scope of the present disclosure is not limited thereto, any changes or replacements within the technical scope disclosed in the present disclosure shall be included in the protection scope of the present disclosure. Therefore, the protection scope of the present disclosure should be based on the protection scope of the claims.

## Claims

1. A monitoring method, **characterized in that** the method is applied to a first communication node, and comprises:
acquiring an association matrix of a precoding matrix processing mode; and
monitoring the precoding matrix processing mode according to a pre-transmission precoding matrix and the association matrix.

2. The method according to claim 1, wherein monitoring the precoding matrix processing mode according to the pre-transmission precoding matrix and the association matrix, comprises:
determining a monitoring value of the precoding matrix processing mode according to a similarity metric value between the pre-transmission precoding matrix and the association matrix; wherein the monitoring value is used to represent a comparison result between the similarity metric value and a preset threshold value; and
monitoring the precoding matrix processing mode according to the monitoring value.

3. The method according to claim 2, wherein monitoring the precoding matrix processing mode according to the monitoring value, comprises:
updating or switching the precoding matrix processing mode according to the monitoring value; or
maintaining the precoding matrix processing mode according to the monitoring value.

4. The method according to claim 2, further comprising:
sending the monitoring value to a second communication node.

5. The method according to claim 4, wherein monitoring the precoding matrix processing mode according to the monitoring value, comprises:
receiving first indication information from the second communication node, wherein the first indication information is used to indicate updating or switching the precoding matrix processing mode, or the first indication information is used to maintain the precoding matrix processing mode; and
monitoring the precoding matrix processing mode according to the first indication information.

6. The method according to claim 3 or 5, wherein updating or switching the precoding matrix processing mode comprises: updating or switching any one of operations comprised in the precoding matrix processing mode;
wherein the precoding matrix processing mode comprises at least one of the operations of:
determining the pre-transmission precoding matrix;
determining an indicator of the pre-transmission precoding matrix;
transmitting an indicator of the pre-transmission precoding matrix;
reconstructing a precoding matrix according to an indicator of the pre-transmission precoding matrix.

7. The method according to claim 3 or 5, wherein updating or switching the precoding matrix processing mode comprises at least one of situations of:
a change in a candidate matrix set used for determining the pre-transmission precoding matrix;
a change in a mode of determining an indicator of the pre-transmission precoding matrix;
a change in an encoding model used for transmitting an indicator of the pre-transmission precoding matrix, wherein the change in the encoding model comprises a change in a model parameter of the encoding model and/or a change in a model structure of the encoding model;
a change in a decoding model used for reconstructing the precoding matrix, wherein the change in the decoding model comprises a change in a model parameter of the decoding model and/or a change in a model structure of the decoding model.

8. The method according to claim 2, wherein the association matrix comprises a group of association matrices or a plurality of groups of association matrices; and the similarity metric value between the pre-transmission precoding matrix and the association matrix comprises at least one of:
a maximum value of similarity metric values between the pre-transmission precoding matrix and matrices in the association matrix;
a minimum value of similarity metric values between the pre-transmission precoding matrix and matrices in the association matrix; and
an average value of similarity metric values between the pre-transmission precoding matrix and matrices in the association matrix.

9. The method according to claim 2, wherein monitoring the precoding matrix processing mode according to the monitoring value, comprises:
determining whether the pre-transmission precoding matrix is within a normal processing range of the precoding matrix processing mode according to the monitoring value;
wherein in response to the pre-transmission precoding matrix being not within the normal processing range, the precoding matrix processing mode is updated or switched.

10. The method according to claim 9, wherein determining whether the pre-transmission precoding matrix is within the normal processing range of the precoding matrix processing mode according to the monitoring value, comprises:
in a case where the monitoring value represents that the similarity metric value is greater than or equal to a preset threshold value, determining that the pre-transmission precoding matrix is within the normal processing range; or
in a case where the monitoring value represents that the similarity metric value is less than or equal to the preset threshold value, determining that the pre-transmission precoding matrix is not within the normal range.

11. The method according to claim 2, wherein the monitoring value comprises a first monitoring value and a second monitoring value,
the first monitoring value and the second monitoring value are respectively used to monitor different operations in the precoding matrix processing mode of the first communication node; or
the first monitoring value is used to monitor the precoding matrix processing mode of the first communication node, and the second monitoring value is used to monitor a precoding matrix processing mode of a second communication node.

12. The method according to claim 11, wherein
the first monitoring value is used to represent a comparison result between the similarity metric value and a first threshold value, and the second monitoring value is used to represent a comparison result between the similarity metric value and a second threshold value; or
the similarity metric value comprises a first similarity metric value and a second similarity metric value, the first monitoring value is used to represent a comparison result between the first similarity metric and a third threshold value, the second monitoring value is used to represent a comparison result between the second similarity metric value and a fourth threshold value, and the third threshold value and the fourth threshold value are the same or different.

13. The method according to claim 11, wherein updating or switching the precoding matrix processing mode according to the monitoring value, comprises:
switching a model structure of an encoding model according to the first monitoring value; and/or
switching a model parameter of an encoding model according to the second monitoring value.

14. The method according to claim 1, wherein acquiring the association matrix of the precoding matrix processing mode, comprises:
receiving second indication information of a second communication node; wherein the second indication information is used to indicate the association matrix; and
acquiring the association matrix according to the second indication information.

15. The method according to claim 14, wherein the second indication information comprises at least one piece of information of:
a correspondence between precoding matrix processing modes and association matrices; wherein a precoding matrix processing mode corresponds to an association matrix or a group of association matrices; or a group of precoding matrix processing modes corresponds to an association matrix or a group of association matrices;
a precoding matrix processing mode corresponding to the association matrix;
a threshold or a group of thresholds;
a number of reference signal ports corresponding to the association matrix.

16. The method according to claim 14, wherein acquiring the association matrix according to the second indication information, comprises:
selecting the association matrix from a candidate matrix according to the second indication information.

17. The method according to claim 16, wherein
the candidate matrix group is generated by the first communication node; or
the candidate matrix group is configured by default; or
the candidate matrix group is indicated by the second communication node or a third communication node.

18. The method according to claim 2, wherein monitoring the precoding matrix processing mode according to the monitoring value, comprises:
selecting a target precoding matrix processing mode from candidate precoding matrix processing modes according to the monitoring value.

19. The method according to claim 18, wherein the target precoding matrix processing mode comprises any one of:
a precoding matrix processing mode corresponding to a matrix with a largest similarity metric value to the pre-transmission precoding matrix, in an association matrix group;
a precoding matrix processing mode corresponding to a matrix with a larger similarity metric value or a smaller similarity metric value among a plurality of similarity metric values between an association matrix group and the pre-transmission precoding matrix;
a precoding matrix processing mode corresponding to a matrix with a similarity metric value greater than or less than a preset value among a plurality of similarity metric values between an association matrix group and the pre-transmission precoding matrix.

20. A monitoring method, **characterized in that** the method is applied to a second communication node, and comprises:
receiving a monitoring value from a first communication node, wherein the monitoring value is determined according to a similarity metric value between a pre-transmission precoding matrix and an association matrix of a precoding matrix processing mode; and
monitoring the precoding matrix processing mode according to the monitoring value.

21. The method according to claim 20, further comprising:
sending first indication information to the first communication node, wherein the first indication information is used to indicate updating or switching the precoding matrix processing mode, or the first indication information is used to indicate maintaining the precoding matrix processing mode.

22. The method according to claim 21, wherein updating or switching the precoding matrix processing mode comprises: updating or switching any one of operations comprised in the precoding matrix processing mode;
wherein the precoding matrix processing mode comprises at least one of the operations of:
determining the pre-transmission precoding matrix;
determining an indicator of the pre-transmission precoding matrix;
transmitting an indicator of the pre-transmission precoding matrix;
reconstructing a precoding matrix according to an indicator of the pre-transmission precoding matrix.

23. The method according to claim 22, wherein updating or switching the precoding matrix processing mode comprises at least one of situations of:
a change in a candidate matrix set used for determining the pre-transmission precoding matrix;
a change in a mode of determining an indicator of the pre-transmission precoding matrix;
a change in an encoding model used for transmitting an indicator of the pre-transmission precoding matrix, wherein the change in the encoding model comprises a change in a model parameter of the encoding model and/or a change in a model structure of the encoding model;
a change in a decoding model used for reconstructing the precoding matrix, wherein the change in the decoding model comprises a change in a model parameter of the decoding model and/or a change in a model structure of the decoding model.

24. The method according to claim 20, further comprising:
sending second indication information to the first communication node, wherein the second indication information is used to indicate the association matrix.

25. The method according to claim 24, wherein the second indication information comprises at least one piece of information of:
a correspondence between precoding matrix processing modes and association matrices; wherein a precoding matrix processing mode corresponds to an association matrix or a group of association matrices; or a group of precoding matrix processing modes corresponds to an association matrix or a group of association matrices;
a precoding matrix processing mode corresponding to the association matrix;
a threshold or a group of thresholds;
a number of reference signal ports corresponding to the association matrix.

26. A communication node, **characterized by** comprising a processor and a communication interface, wherein the processor is configured to implement the monitoring method according to any one of claims 1 to 19.

27. A communication node, **characterized by** comprising a processor and a communication interface, wherein the processor is configured to implement the monitoring method according to any one of claims 20 to 25.

28. A computer readable storage medium, comprising computer instructions;
wherein when the computer instructions are executed, the monitoring method according to any one of claims 1 to 19 or according to any one of claims 20 to 25 is implemented.
